# EUROPEAN PATENT APPLICATION

(11) **EP 4 694 218 A1**
(43) Date of publication of application: **11.02.2026**
(21) Application number: 23931436.2
(22) Date of filing: 06.04.2023
(51) Int. Cl.: H04W 4/06, H04B 7/185, H04W 72/40

(54) **SATELLITE COVERAGE INFORMATION DETERMINATION METHOD AND APPARATUS**

(71) Applicant: Beijing Xiaomi Mobile Software Co., Ltd., Beijing 100085 (CN)
(72) Inventor: LU, Wei, Beijing 100085 (CN)
(74) Representative: Gunzelmann, Rainer
(86) International application number: PCT/CN2023/086722
(87) International publication number: WO 2024/207368

(57) **Abstract**

Disclosed in embodiments of the present application are a satellite coverage information determination method and an apparatus, which can be applied to a communication system such as a long term evolution (LTE) system, a 5th generation (5G) mobile communication system, a 5G new radio (NR) system, or other future novel mobile communication systems. The method comprises: receiving first satellite coverage information and second satellite coverage information; and determining target satellite coverage information according to the first satellite coverage information and the second satellite coverage information. By implementing the embodiments of the present application, the target satellite coverage information can be determined according to the first satellite coverage information and the second satellite coverage information, and communication can be carried out according to the correct target satellite coverage information, thereby facilitating resource saving, and avoiding resource waste.

## Description

### TECHNICAL FIELD

The disclosure relates to the field of communication technology, in particular to a method for determining satellite coverage information and a related apparatus.

### BACKGROUND

In wireless communication, satellite coverage information may be provided to a terminal by an external server through an external message.

### SUMMARY

The embodiments of the disclosure provide a method for determining satellite coverage information and a related apparatus, which can be applied to communication systems such as a long term evolution (LTE) system, a 5th generation (5G) mobile communication system, a 5G new radio (NR) system, or other future new mobile communication systems. The method determines target satellite coverage information based on first satellite coverage information and second satellite coverage information, to ensure that communication can be carried out based on the correct target satellite coverage information, which is beneficial to saving resources and avoiding resource waste.

According to a first aspect of embodiments of the disclosure, a method for determining satellite coverage information is provided. The method includes:
receiving first satellite coverage information and second satellite coverage information; and
determining target satellite coverage information based on the first satellite coverage information and the second satellite coverage information.

In the technical solution, the target satellite coverage information is determined based on the first satellite coverage information and the second satellite coverage information, so that communication can be carried out based on the correct target satellite coverage information, which is beneficial to saving resources and avoiding resource waste.

In an embodiment of the disclosure, receiving the first satellite coverage information and the second satellite coverage information includes:
receiving a system information block (SIB) sent by a non-terrestrial network radio access network (NTN-RAN), and obtaining the first satellite coverage information in the SIB.

In an embodiment of the disclosure, the method further includes:
performing an operation related to a radio access network based on the first satellite coverage information.

In an embodiment of the disclosure, receiving the first satellite coverage information and the second satellite coverage information includes:
receiving the second satellite coverage information from an external server via a protocol data unit (PDU) session.

In an embodiment of the disclosure, determining the target satellite coverage information based on the first satellite coverage information and the second satellite coverage information includes:
if the first satellite coverage information is consistent with the second satellite coverage information, determining both the first satellite coverage information and the second satellite coverage information as the target satellite coverage information; or
if the first satellite coverage information is inconsistent with the second satellite coverage information, determining the second satellite coverage information as the target satellite coverage information.

In an embodiment of the disclosure, the method further includes:
performing an operation related to a radio access network based on the target satellite coverage information.

According to a second aspect of embodiments of the disclosure, a communication apparatus is provided. The communication apparatus has an ability to implement part or all of the functions of the terminal in the method described in the first aspect. For example, the communication apparatus may have functions of some or all of the embodiments of the disclosure, or may have a function of independently implementing any embodiment of the disclosure. The functions may be implemented by hardware or by executing corresponding software using the hardware. The hardware or software includes one or more units or modules corresponding to the above functions.

In an implementation, the communication apparatus includes: a transceiver module and a processing module. The processing module is configured to support the communication apparatus to implement corresponding functions in the above method. The transceiver module is configured to support communication between the communication apparatus and other devices. The communication apparatus may also include a storage module coupled to the transceiver module and the processing module, which is configured to store necessary computer programs and data for the communication apparatus.

The processing module may be a processor, the transceiver module may be a transceiver or a communication interface, and the storage module may be a memory. In an implementation, the communication apparatus includes:
a transceiver module, configured to receive first satellite coverage information and second satellite coverage information; and
a processing module, configured to determine target satellite coverage information based on the first satellite coverage information and the second satellite coverage information.

According to a third aspect of embodiments of the disclosure, a communication device is provided. The communication device includes: a processor. When the processor calls a computer program stored in a memory, the method described in the first aspect above is implemented.

According to a fourth aspect of embodiments of the disclosure, a communication device is provided. The communication device includes: a processor and a memory having a computer program stored thereon. When the processor executes the computer program stored in the memory, the communication device is caused to implement the method described in the first aspect above.

According to a fifth aspect of embodiments of the disclosure, a communication device is provided. The communication device includes: a processor and an interface circuit. The interface circuit is configured to receive code instructions and transmit the code instructions to the processor, and the processor is configured to run the code instructions to cause the device to implement the method described in the first aspect above.

According to a sixth aspect of embodiments of the disclosure, a system for determining satellite coverage information is provided. The system includes the communication apparatus described in the second aspect, the communication device described in the third aspect, the communication device described in the fourth aspect, or the communication device described in the fifth aspect.

According to a seventh aspect of embodiments of the disclosure, a computer-readable storage medium is provided. The computer-readable storage medium is configured to store instructions used by the above terminal. When the instructions are executed, the terminal is caused to implement the method described in the first aspect above.

According to an eighth aspect of the disclosure, a computer program product including a computer program is provided. When the computer program is running on a computer, the computer is caused to implement the method described in the first aspect above.

According to a ninth aspect of the disclosure, a chip system is provided. The chip system includes at least one processor and an interface for supporting the terminal in realizing the functions involved in the first aspect, e.g., determining or processing at least one of data or information involved in the method described above. In a possible design, the chip system further includes a memory, which is configured to store necessary computer programs and data for the terminal. The chip system may consist of chips or may include chips and other discrete components.

According to a tenth aspect of the disclosure, a computer program is provided. When the computer program is running on a computer, the computer is caused to implement t the method described in the first aspect above.

### BRIEF DESCRIPTION OF THE DRAWINGS

In order to clearly illustrate technical solutions of embodiments of the disclosure or background technologies, descriptions of drawings used in the embodiments of the disclosure or the background technologies are given below.
FIG. 1 is a schematic diagram of a communication system provided by an embodiment of the disclosure.
FIG. 2 is a flowchart of a method for determining satellite coverage information provided by an embodiment of the disclosure.
FIG. 3 is a flowchart of a method for determining satellite coverage information provided by an embodiment of the disclosure.
FIG. 4 is a schematic structural diagram of a communication apparatus provided by an embodiment of the disclosure.
FIG. 5 is a schematic structural diagram of a communication device provided by an embodiment of the disclosure.
FIG. 6 is a schematic structural diagram of a chip provided by an embodiment of the disclosure.

### DETAILED DESCRIPTION

In order to better understand a method for determining satellite coverage information disclosed in the embodiments of the disclosure, a communication system to which the method is applied is introduced first below.

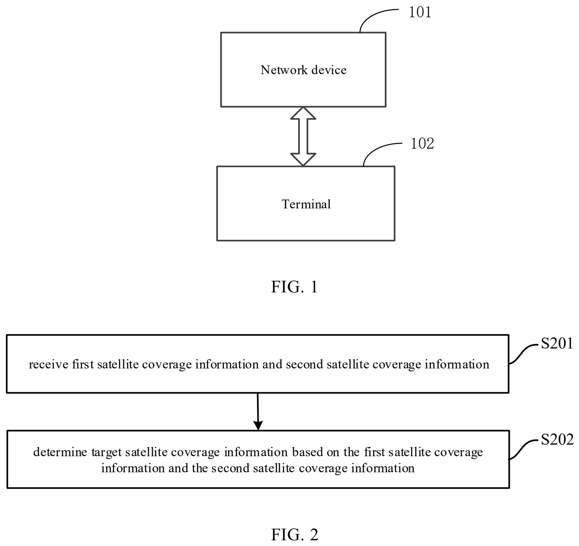

As illustrated in FIG. 1, FIG. 1 is a schematic structural diagram of a communication system provided by an embodiment of the disclosure. The communication system includes, but is not limited to, one network device and one terminal. The specific number and form of devices illustrated in FIG. 1 are only illustrated as examples and do not constitute a limitation on the embodiments of the disclosure, and two or more network devices and two or more terminals may be included in practical applications. The communication system illustrated in FIG. 1 includes one network device 101 and one terminal 102.

It is noteworthy that the technical solution of the embodiments of the disclosure may be applied to various communication systems, such as, a LTE system, a 5G mobile communication system, a 5G NR system, or other future new mobile communication systems. It should also be noted that side link in the embodiments of the disclosure may also be referred to as a direct link or a device-to-device link.

The network device 101 in the embodiments of the disclosure is an entity on a network side for transmitting or receiving signals. For example, the network device 101 may be an evolved NodeB (eNB), a transmission reception point (TRP), a next generation NodeB (gNB) in a NR system, a base station in a future mobile communication system, or an access node in a wireless fidelity (Wi-Fi) system. The specific technology and device form adopted by the network device are not limited in the embodiments of the disclosure. The network device provided by the embodiments of the disclosure may be composed of a central unit (CU) and a distributed unit (DU). Sometimes, the CU may also be called control unit. The use of CU-DU structure allows to divide a protocol layer of the network device, such as a base station, such that some functions of the protocol layer are placed in the CU for centralized control, and some or all of the remaining functions of the protocol layer are distributed in the DU, which is centrally controlled by the CU.

The terminal 102 in the embodiments of the disclosure is an entity on a user side for receiving or transmitting signals, such as a cellular phone. The terminal may also be referred to as terminal, user equipment (UE), mobile station (MS), mobile terminal (MT), and the like. The terminal may be a car with communication functions, a smart car, a mobile phone, a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and device form adopted by the terminal are not limited in the embodiments of the disclosure.

In related technologies, an external server may provide satellite coverage information to a terminal via an external message. The terminal may determine a coverage range in the case of discontinuous satellite coverage by using the pre-configured satellite coverage information. However, the satellite coverage information can be easily tampered with. Due to incorrect satellite coverage information, the terminal may be misled to keep sending signals to access the network when it is already out of coverage, thereby causing unnecessary power consumption, or the terminal may be misled to stop sending signals to access the network when it is still in network coverage, thereby affecting normal communication.

In detail, in the current 3GPP R18 specification for satellite access with discontinuous satellite coverage, satellite coverage information is provided to a terminal by an external server via a PDU session over a user plane, and the terminal determines its out-of-coverage period in the case of discontinuous satellite coverage by using the pre-configured satellite coverage information.

Satellite coverage information (in the form of satellite ephemeris data) may also be sent by an NTN-RAN to a UE via an SIB information, and the information is used by the terminal for radio access network operations for satellite access. Since the SIB information is transmitted via unprotected broadcast, the satellite coverage information carried in the broadcast SIB information is highly susceptible to tampering by attackers. If the tampered satellite coverage information distorts the actual satellite coverage, the terminal may be misled to stop operation during the network coverage period, constituting a Denial of Service (DoS) attack. Alternatively, when a terminal has already moved out of coverage range, it may be misled into continuing to transmit signals to access the network, resulting in unnecessary power consumption.

Since the terminal obtain satellite coverage information from different sources via different transmission paths, it should incorporate a mechanism to determine which satellite coverage information to utilize while also considering the authenticity of the received information.

It is understandable that the communication system described in the embodiments of the disclosure is introduced first to clearly illustrate the technical solution in the embodiments of the disclosure, and the description does not constitute a limitation on the technical solution provided by the embodiments of the disclosure. Those skilled in the art understand that as system architectures evolve and new business scenarios emerge, the technical solution provided by the embodiments of the disclosure is applicable to similar technical problems.

A method for determining satellite coverage information and a related apparatus in the disclosure are described in detail below with reference to the accompanying drawings.

As illustrated in FIG. 2, FIG. 2 is a flowchart of a method for determining satellite coverage information provided by an embodiment of the disclosure. The method is applied to a terminal. As illustrated in FIG. 2, the method includes, but is not limited to the following steps.

In S201, first satellite coverage information and second satellite coverage information are received.

In the embodiments of the disclosure, the first satellite coverage information and the second satellite coverage information may be sent by different sources. For example, the first satellite coverage information may be provided by an NTN-RAN, and the second satellite coverage information may be provided by an external server.

In the embodiments of the disclosure, the second satellite coverage information may be encrypted by the external server for protection during transmission.

In S202, target satellite coverage information is determined based on the first satellite coverage information and the second satellite coverage information.

In the embodiments, the terminal may receive the first satellite coverage information provided by the NTN-RAN or the second satellite coverage information provided by the external server. The first satellite coverage information broadcasted by the NTN-RAN has a certain risk of being tampered with because it is not protected during transmission, while the second satellite coverage information is protected by a security policy, which prevents it from being tampered with by attackers during transmission. By comparing the first satellite coverage information with the second satellite coverage information, it is determined whether the first satellite coverage information has been tampered with, so as to identify the correct target satellite coverage information.

In the technical solution, the target satellite coverage information is determined based on the first satellite coverage information and the second satellite coverage information, so that communication may be carried out based on the correct target satellite coverage information, which is beneficial to saving resources and avoiding resource waste.

In an embodiment of the disclosure, receiving the first satellite coverage information and the second satellite coverage information includes:
receiving an SIB sent by an NTN-RAN, and obtaining the first satellite coverage information in the SIB.

In a case that the NTN-RAN broadcasts the satellite coverage information to the terminal (UE), there is a risk that attackers may tamper with the broadcast message when it is not protected by the current specification.

In an embodiment of the disclosure, the method further includes:
performing an operation related to a radio access network based on the first satellite coverage information.

In the embodiments, in a case that the terminal only receives the first satellite coverage information from the NTN-RAN, the terminal has to use it for the operation related to the radio access network, even though the first satellite coverage information is not protected.

In a possible embodiment, the operation related to the radio access network includes: the terminal (UE) performs a timing advance (TA) compensation processing based on the satellite ephemeris data. Or, the terminal predicts the discontinuous network coverage based on the satellite ephemeris data, so as to determine not to perform tasks in an idle state, thereby achieving the purpose of power saving. In an embodiment of the disclosure, receiving the first satellite coverage information and the second satellite coverage information includes:
receiving the second satellite coverage information from an external server via a PDU session.

In the embodiments, in a case that the external server provides the second satellite coverage information via the PDU session, the transmission of the satellite coverage information is protected either with application layer security or by properly setting the UP security policy.

In an embodiment of the disclosure, determining the target satellite coverage information based on the first satellite coverage information and the second satellite coverage information includes:
if the first satellite coverage information is consistent with the second satellite coverage information, determining both the first satellite coverage information and the second satellite coverage information as the target satellite coverage information; or
if the first satellite coverage information is inconsistent with the second satellite coverage information, determining the second satellite coverage information as the target satellite coverage information.

In the embodiments, if the first satellite coverage information is consistent with the second satellite coverage information, it implies that the first satellite coverage information received from the NTN-RAN through the SIB message has not been tampered with during transmission. If the first satellite coverage information is inconsistent with the second satellite coverage information, it implies that the first satellite coverage information received from the NTN-RAN through the SIB message has been tampered during transmission. In this case, the first satellite coverage information is discarded, and the second satellite coverage information is determined as the correct target satellite coverage information.

In an embodiment of the disclosure, the method further includes:
performing an operation related to a radio access network based on the target satellite coverage information.

In the embodiments, after determining the target satellite coverage information based on the first satellite coverage information and the second satellite coverage information, the operation related to the radio access network is performed based on the correct target satellite coverage information, which is beneficial to saving resources and avoiding resource waste.

In a possible embodiment, the operation related to the radio access network includes: the UE performs a TA compensation processing based on the satellite ephemeris data. Or, the terminal predicts the discontinuous network coverage based on the satellite ephemeris data, so as to determine not to perform tasks in an idle state, thereby achieving the purpose of power saving.

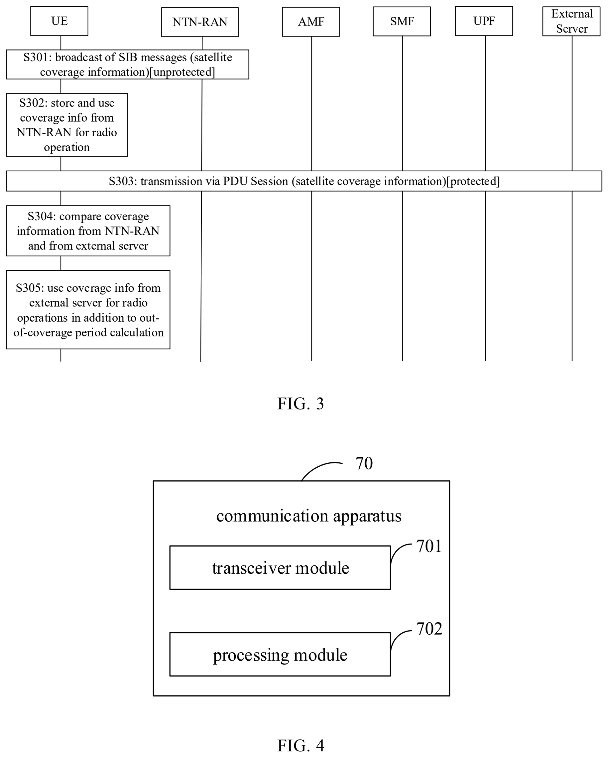

As illustrated in FIG. 3, FIG. 3 is a flowchart of a method for determining satellite coverage information provided by an embodiment of the disclosure. In a possible embodiment, the method includes the following blocks.

S301: broadcast of SIB messages (satellite coverage information) [unprotected]. That is, a UE receives SIB messages broadcasted by an NTN-RAN, and obtains satellite coverage information included in the SIB messages.

S302: store and use coverage info from NTN-RAN for radio operation. That is, the UE stores first satellite coverage information and performs an operation related to a radio access network based on the satellite coverage information included in the SIB messages.

S303: transmission via PDU Session (satellite coverage information) [protected]. That is, the UE receives satellite coverage information from an external server via a PDU session.

S304: compare coverage information from NTN-RAN and from external server. It is determined whether the satellite coverage information sent by the NTN-RAN has been tampered by comparing the two, and if they are consistent, continue to S305, otherwise, discard the satellite coverage information in the SIB messages.

S305: use coverage info from external server for radio operations in addition to out-of-coverage period calculation.

In the above embodiments of the disclosure, the method provided by the embodiments of the disclosure is introduced from the perspectives of the network device and the terminal, respectively. In order to realize the functions in the method provided by the embodiments of the disclosure, the network device and the terminal may include a hardware structure and a software module, and implement the above functions in the form of the hardware structure, the software module, or a combination of the hardware structure and the software module. A certain function of the above functions may be implemented in the form of the hardware structure, the software module, or the combination of the hardware structure and the software module.

FIG. 4 is a schematic diagram of a communication apparatus 70 provided by an embodiment of the disclosure. The communication apparatus 70 shown in FIG. 4 may include a transceiver module 701 and a processing module 702. The transceiver module 701 may include a sending module and/or a receiving module. The sending module is used for realizing a sending function, and the receiving module is used for realizing a receiving function. The transceiver module 701 may realize the sending function and/or the receiving function.

The communication apparatus 70 may be a terminal (e.g., the terminal in the above method embodiments), a device in the terminal, or a device that can be used together with the terminal. Or, the communication apparatus 70 may be a network device, a device in the network device, or a device that can be used together with the network device.

If the communication apparatus 70 is a terminal,
the transceiver module is configured to receive first satellite coverage information and second satellite coverage information; and
the processing module is configured to determine target satellite coverage information based on the first satellite coverage information and the second satellite coverage information.

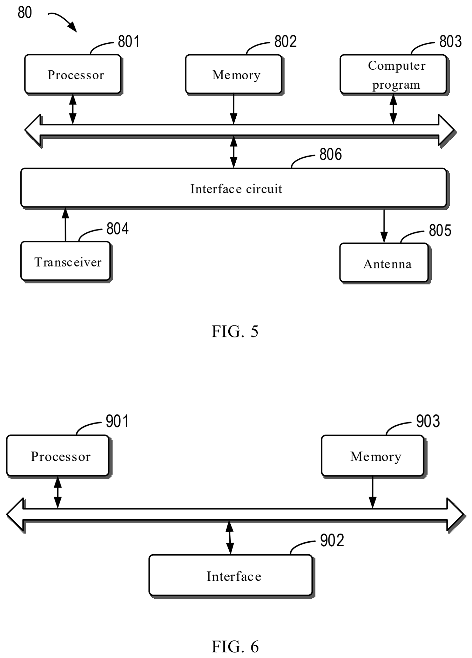

FIG. 5 is a schematic structural diagram of a communication device 80 provided by an embodiment of the disclosure. The communication device 80 may be a network device, a terminal (e.g., the terminal in the above method embodiments), or a chip, a chip system or a processor that supports the network device to implement the above method, or a chip, a chip system or a processor that supports the terminal to implement the above method. The device may be used to implement the method described in the above method embodiments with reference to the descriptions of the above method embodiments.

The communication device 80 may include one or more processors 801. The processor 801 may be a general purpose processor or a dedicated processor, such as, a baseband processor or a central processor. The baseband processor is used for processing communication protocols and communication data. The central processor is used for controlling the communication device (e.g., base station, baseband chip, terminal, terminal chip, DU or CU), executing computer programs, and processing data of the computer programs.

In an embodiment of the disclosure, the communication device 80 may further include one or more memories 802 on which a computer program 803 is stored. When the processor 801 executes the computer program 803, the communication device 80 is caused to implement the method described in the above method embodiments. In an embodiment of the disclosure, the memory 802 may also store data. The communication device 80 and the memory 802 may be provided separately or may be integrated together.

In an embodiment of the disclosure, the communication device 80 may also include a transceiver 804 and an antenna 805. The transceiver 804 may be referred to as transceiver unit, transceiver machine, or transceiver circuit, for implementing the transceiver function. The transceiver 804 may include a receiver and a transmitter. The receiver may be referred to as receiver machine or receiving circuit, for implementing a receiving function. The transmitter may be referred to as transmitter machine or transmitting circuit, for implementing a transmitting function.

In an embodiment of the disclosure, the communication device 80 may also include one or more interface circuits 806. The interface circuits 806 are used to receive code instructions and transmit the code instructions to the processor 801. The processor 801 runs the code instructions to cause the communication device 80 to implement the method described in the above method embodiments.

In an implementation, the processor 801 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 801 may store a computer program 803 that can be executed by the processor 801 and may cause the communication device 80 to implement the method described in the method embodiments above. The computer program 803 may be solidified in the processor 801, in which case the processor 801 may be implemented by hardware.

In an implementation, the communication device 80 may also include circuits. The circuits may implement the transmitting, receiving, or communicating function in the preceding method embodiments. The processor and the transceiver described in the disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processor and the transceiver may be produced using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication device in the descriptions of the above embodiments may be a network device or a terminal (e.g., the terminal in the above method embodiments), but the scope of the communication device described in the disclosure is not limited thereto, and the structure of the communication device is not limited by FIG. 5. The communication device may be a stand-alone device or may be part of a larger device. For example, the communication device may be:
(1) a stand-alone IC, chip, chip system or subsystem;
(2) a collection of ICs including one or more ICs, in an embodiment of the disclosure, the collection of ICs may also include storage components for storing data and computer programs;
(3) an ASIC, such as a modem;
(4) modules that may be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case that the communication device is a chip or a chip system can refer to the schematic structural diagram of a chip shown in FIG. 6. The chip shown in FIG. 6 includes a processor 901 and an interface 902. There may be one or more processors 901 and a plurality of interfaces 902.

In an embodiment of the disclosure, the chip also includes a memory 903 for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

An embodiment of the disclosure also provides a system for determining satellite coverage information. The system includes the communication apparatus as a terminal (e.g., the terminal in the above method embodiments) and the communication apparatus as a network device in the above embodiment of FIG. 4, or the system includes the communication device as a terminal (e.g., the terminal in the above method embodiments) and the communication device as a network device in the above embodiment of FIG. 5.

The disclosure also provides a readable storage medium having an instruction stored thereon. When the instruction is executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer programs on the computer, all or part of processes or functions described in the embodiments of the disclosure are implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access or a data storage device integrated by one or more usable mediums such as a server or a data center. The usable medium may be a magnetic medium (e.g., floppy disk, hard disk, and tape), an optical medium (e.g., a high-density digital video disc (DVD)), or a semiconductor medium (e.g., a solid state disk (SSD)).

Those skilled in the art understand that "first", "second" and other various numerical numbers involved in the disclosure are only described for the convenience of differentiation, and are not used to limit the scope of the embodiments of the disclosure, or indicate the order of precedence.

The term "at least one" in the disclosure may also be described as one or more, and the term "multiple" may be two, three, four or more, which is not limited in the disclosure. In the embodiments of the disclosure, for a type of technical features, "first", "second" and "third", and "A", "B", "C" and "D" are used to distinguish different technical features of the type, the technical features described using the "first", "second" and "third", and "A", "B", "C" and "D" do not indicate any order of precedence or magnitude.

The correspondences shown in the tables in the disclosure may be configured or predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in the disclosure may not be configured, or the above tables may be adjusted appropriately, for example, through splitting, combining, or the like. The names of the parameters shown in the titles of the above tables may be other names that can be understood by the communication device, and the values or representations of the parameters may be other values or representations that can be understood by the communication device. Each of the above tables may also be implemented with other data structures, such as, arrays, queues, containers, stacks, linear tables, pointers, chained lists, trees, graphs, structures, classes, heaps, and Hash tables.

The term "predefine" in the disclosure may be understood as define, predefine, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and the design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above may be referred to the corresponding processes in the method embodiments, which will not be repeated herein.

The above are only specific implementations of the disclosure, but the scope of protection of the disclosure is not limited thereto. Those skilled in the art familiar to this technical field may easily think of changes or substitutions in the technical scope disclosed by the disclosure, which shall be covered by the scope of protection of the disclosure. Therefore, the scope of protection of the disclosure shall be governed by the scope of protection of the attached claims.

## Claims

1. A method for determining satellite coverage information, applied to a terminal, comprising:
receiving first satellite coverage information and second satellite coverage information; and
determining target satellite coverage information based on the first satellite coverage information and the second satellite coverage information.

2. The method of claim 1, wherein receiving the first satellite coverage information and the second satellite coverage information comprises:
receiving a system information block (SIB) sent by a non-terrestrial network radio access network (NTN-RAN), and obtaining the first satellite coverage information in the SIB.

3. The method of claim 2, further comprising:
performing an operation related to a radio access network based on the first satellite coverage information.

4. The method of claim 1, wherein receiving the first satellite coverage information and the second satellite coverage information comprises:
receiving the second satellite coverage information from an external server via a protocol data unit (PDU) session.

5. The method of any one of claims 1-4, wherein determining the target satellite coverage information based on the first satellite coverage information and the second satellite coverage information comprises:
if the first satellite coverage information is consistent with the second satellite coverage information, determining both the first satellite coverage information and the second satellite coverage information as the target satellite coverage information; or
if the first satellite coverage information is inconsistent with the second satellite coverage information, determining the second satellite coverage information as the target satellite coverage information.

6. The method of any one of claims 1-5, further comprising:
performing an operation related to a radio access network based on the target satellite coverage information.

7. A communication apparatus, applied to a terminal, comprising:
a transceiver module, configured to receive first satellite coverage information and second satellite coverage information; and
a processing module, configured to determine target satellite coverage information based on the first satellite coverage information and the second satellite coverage information.

8. A communication device, comprising a processor and a memory, wherein the memory stores a computer program, and the processor executes the computer program stored in the memory to cause the device to implement the method of any one of claims 1-6.

9. A communication device, comprising a processor and an interface circuit;
wherein the interface circuit is configured to receive code instructions and transmit the code instructions to the processor; and
the processor is configured to execute the code instructions to implement the method of any one of claims 1-6.

10. A computer-readable storage medium, wherein the medium is configured to store instructions, and when the instructions are executed, the method of any one of claims 1-6 is implemented.
